Europäisches Patentamt

European Patent Office

Office européen des brevets

(19)

(11) Veröffentlichungsnummer: **0 241 737 B1**

# EUROPÄISCHE PATENTSCHRIFT

(2)

(45) Veröffentlichungstag der Patentschrift: **27.02.91**

(51) Int. Cl.⁵: **G01S 15/02**, G01S 7/52

(21) Anmeldenummer: **87103886.5**

(22) Anmeldetag: **17.03.87**

(54) **Verfahren zum Erkennen von Unterwasserobjekten.**

(30) Priorität: **14.04.86 DE 3612526**

(43) Veröffentlichungstag der Anmeldung:
**21.10.87 Patentblatt 87/43**

(45) Bekanntmachung des Hinweises auf die
Patenterteilung:
**27.02.91 Patentblatt 91/09**

(84) Benannte Vertragsstaaten:
**DE FR GB IT NL SE**

(56) Entgegenhaltungen:
GB-A- 2 085 591          US-A- 3 603 919
US-A- 3 705 381          US-A- 3 716 823
US-A- 3 732 533          US-A- 4 322 974

PATENT ABSTRACTS OF JAPAN, Band 6, Nr.
27 (P-102)[905], 17. Februar 1982; & JP-A-56
147 082 (YOSHINORI HAYAKAWA) 14-11-1981

(73) Patentinhaber: **Fried. Krupp Gesellschaft mit
beschränkter Haftung
Altendorfer Strasse 103
D-4300 Essen 1(DE)**

(72) Erfinder: **Arens, Egidius
Cordstrasse 13
D-2807 Achim(DE)**

## Beschreibung

Die Erfindung betrifft ein Verfahren zum Erkennen von Unterwasserobjekten der im Oberbegrifft des Anspruchs 1 angegebenen Gattung.

Bei einem bekannten Verfahren dieser Art (US-PS 3 603 919) wird die Beschallung der Unterwasserobjekte mit einem breitbandigen langen Sweep durchgeführt, der den Frequenzbereich, in welchem die Resonanzfrequenzen der erwarteten Unterwasserobjekte liegen, überdeckt und typischerweise von 4 kHz bis 12 kHz reicht. Durch Aufsuchen der Resonanzfrequenzlinien in dem Empfangsspektrum der Echos und Vergleich mit vorbekannten Resonanzfrequenzmustern bekannter bzw. gesuchter Unterwasserobjekte können die einzelnen Unterwasserobjekte nicht nur detektiert, sondern auch identifiziert bzw. klassifiziert werden. Ein solches Verfahren wird vornehmlich zur Minensuche bei steinigem Gewässergrund verwendet, da die technischen Minenkörper im Gegensatz zu Steinen ausgeprägte Resonanzfrequenzen aufweisen.

Das bekannte Verfahren läßt sich auch auf andere Unterwasserobjekte, z. B. auch auf U-Boote ausdehnen, da U-Boote ausgeprägte Strukturresonanzen im Frequenzbereich zwischen 0,1 bis 1 kHz aufweisen. Diese Strukturresonanzen sind konstruktiv bedingt, z. B. durch den Spantenabstand des U-Boot-Körpers, so daß jeder U-Boot-Typ ein ganz bestimmtes charakteristisches Resonanzfrequenzmuster aufweist. Allerdings ist die mit dem bekannten Verfahren erzielbare Reichweite zum Erkennen von U-Booten relativ gering, da die Sendeleistung, mit welcher der Sweep ins Wasser abgestrahlt wird, durch die Sendeverstärker begrenzt ist.

Aus diesem Grund hat man bei einem ebenfalls bekannten Verfahren der eingangs genannten Art (US-PS 3 732 533) vorgeschlagen, die Hüllkörper-Resonanzen getauchter U-Boote mit Hilfe von Unterwasser-Explosiv-Akustiksendern zu bestimmen, die im Frequenzbereich der Hüllkörper-Resonanzen von U-Booten eine weitaus größere Sendeleistung zur Verfügung stellen können. Explosionssender haben allerdings noch keine nennenswerte Verbreitung gefunden. Bei vorhandenen Sonaranlagen bedeutet ihr Einsatz einen nicht unwesentlichen zusätzlichen Aufwand.

Der Erfindung liegt die Aufgabe zugrunde, ein für U-Boot-Detektion und/oder -Klassifikation geeignetes Verfahren der eingangs genannten Art anzugeben, das mit herkömmlichen Sonaranlagen ein Auffassen von U-Booten auf eine sehr große Distanz gestattet.

Die Aufgabe ist bei einem Verfahren der im Oberbegriff des Anspruchs 1 definierten Gattung erfindungsgemäß durch die Merkmale im Kennzeichenteil des Anspruchs 1 gelöst.

Durch die Verwendung der erfindungsgemäßen Sendepulsfolge aus Einzelpulsen - auch Pulse-Train genannt - , deren Frequenz jeweils einer Resonanzfrequenz im Resonanzfrequenzspektrum mindestens eines bekannten U-Boot-Typs entspricht, wobei der Pulse-Train mindestens das gesamte Resonanzfrequenzspektrum des U-Boot-Typs abdeckt, kann jeder Einzelpuls mit der maximal verfügbaren Sendeleistung abgestrahlt werden. Im Gegensatz zu den bekannten Verfahren des Aussendens eines breitbandigen Sweeps wird die zur Verfügung stehende Sendeenergie nicht auf das ganze Frequenzspektrum aufgeteilt, sondern steht in voller Größe für jede einzelne Sendefrequenz zur Verfügung. Damit ist die ins Wasser abgestrahlte spektrale Sendeenergie sehr viel größer als bei den bekannten Verfahren, so daß U-Boote mit einem der Frequenzstruktur des Pulse-Trains entsprechenden Resonanzfrequenzmuster noch über sehr große Entfernung zur Eigenresonanz angeregt werden können.

Die gleiche Sendeenergie läßt sich entweder mit kurzen Einzelpulsen und sehr hoher Sendeleistung oder mit langen Sendepulsen und entsprechend niedriger Sendeleistung ins Wasser abstrahlen. Aus bauelementtechnischen Gründen wird dabei die letzte Variante bevorzugt. Bei den bekannten Verfahren ist die Länge des Sweeps jedoch begrenzt durch die minimale Reichweite, also durch die kürzeste Entfernung, in welcher noch ein Unterwasserobjekt erkannt werden soll; denn für die einwandfreie Funktion ist es erforderlich, daß der Sendepuls zu Ende ist, bevor die ersten, von dem Sendepuls hervorgerufenen Echos den Empfänger erreichen. Dieser Zwang in der Bemessung der Sendepulsdauer entfällt bei dem erfindungsgemäßen Verfahren. Die Aussendung des nachfolgenden Einzelpulses und der Empfang der von dem vorhergehenden Einzelpuls ausgelösten Echos können sich zeitlich überlappen, da im Empfangssignal aufgrund der unterschiedlichen Frequenzen die von verschiedenen Einzelpulsen herrührenden Echos ohne weiteres getrennt werden können. Das erfindungsgemäße Verfahren gestattet damit das Aussenden von relativ langen Einzelpulsen bei insgesamt nicht zu langer Gesamtsendedauer des Pulse-Trains und kommt damit den von Seiten der elektronischen Bauteile erhobenen Forderungen entgegen, so daß mit gleichen Bauelementen mehr elektrische Energie ins Wasser übertragen werden kann als bei den bekannten Verfahren.

Das erfindungsgemäße Verfahren ermöglicht die Detektion von U-Booten mit extrem kleiner Falschalarmrate. Da der jeweils ausgesendete Pulse-Train gezielt auf die Resonanzfrequenzstruktur eines oder mehrerer U-Boot-Typen abgestellt ist, können andere Objekte im Ortungsbereich nicht mit den gleichen Resonanzfrequenzmustern antworten. Eine Fehlerkennung ist nahezu ausgeschlossen. Zugleich liefert das erfindungsgemäße Verfahren automatisch die Identifizierung bzw. Klassifizierung der detektierten U-Boote.

Das erfindungsgemäße Verfahren kann so viele U-Boot-Typen detektieren, wie bekannte Resonanzfrequenzspektren bei der Einzelpulsaussendung berücksichtigt worden sind. Dabei kann gemäß der Ausgestaltung der Erfindung nach Anspruch 2 jeweils eine Sendepulsfolge ein komplettes Resonanzfrequenzmuster eines einzigen U-Boot-Typs abdecken, aber auch gemäß Anspruch 3 eine Sendepulsfolge mit ihren Einzelpulsfrequenzen auf eine Mehrzahl von bekannten Resonanz frequenzmustern verschiedener U-Boot-Typen abgestimmt sein, wobei für Resonanzfrequenzen, die in verschiedenen Resonanzfrequenzmustern identisch auftreten, nur ein einziger Einzelpuls ausgesendet wird. Erfaßt die Vielzahl von Pulsfolgen für jeweils ein Resonanzfrequenzmuster oder die Pulsfolge für eine Vielzahl von Resonanzfrequenzmustern die Gesamtzahl der vorhandenen oder im Einsatz befindlichen gegnerischen U-Boot-Typen, so ist ein leistungsfähiges Detektionsverfahren zur Erkennung gegnerischer U-Boote gegeben, das ohne Zusatzaufwand auch ein Klassifikationsmerkmal des jeweils georteten U-Bootes liefert.

Die Erfindung ist anhand einer in der Zeichnung dargestellten Vorrichtung zum Erkennen von Unterwasserobjekten im nachfolgenden näher beschrieben. Es zeigen:

Fig. 1   ein Blockschaltbild einer Vorrichtung zur Detektion und Klassifikation von U-Booten,

Fig. 2   ein Zeitdiagramm einer beispielhaften Sendepulsfolge der Vorrichtung in Fig. 1.

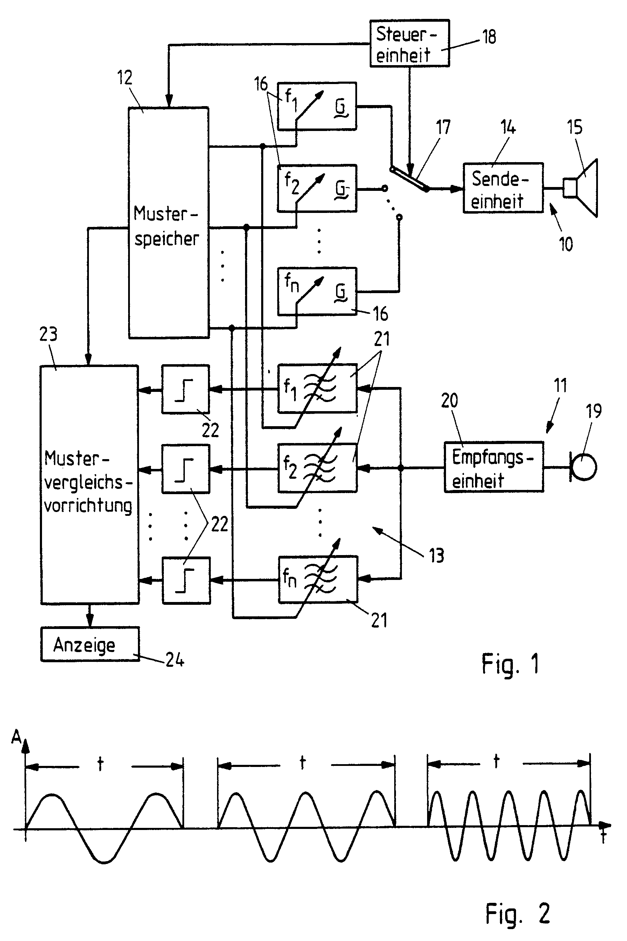

Die in Fig. 1 im Blockschaltbild schematisiert dargestellte Detektions- und Klassifikationsvorrichtung für U-Boote weist einen Sender 10, einen Empfänger 11, einen Musterspeicher 12 und eine Auswerteschaltung 13 auf. In dem Musterspeicher 12 ist eine Vielzahl von bekannten Resonanzfrequenzmustern verschiedener U-Boot-Typen abgespeichert.

Der Sender 10 umfaßt eine Sendeeinheit 14 zur Erzeugung elektrischer Sendepulsfolgen, die sich jeweils aus einer Anzahl n Einzelpulsen zusammensetzen, eine Sendeantenne 15 und eine Anzahl n Sendesignalgeneratoren 16, die über einen Multiplexer 17 mit der Sendeeinheit 14 verbindbar sind. Jeder Sendesignalgenerator 16 erzeugt ein elektrisches Sendesignal bestimmter Frequenz $f_1$-$f_n$. Die Frequenzen $f_1$-$f_n$ der einzelnen Sendesignalgeneratoren werden über Steuereingänge entsprechend eines oder mehrerer aus dem Musterspeicher aufgerufener Resonanzfrequenzmuster eingestellt. Eine Steuereinheit 18 schaltet den Multiplex er 17, so daß nacheinander jeder der Signalgeneratoren 16 mit der Sendeeinheit 14 für eine vorgegebene Zeitdauer t verbunden ist. Weiterhin veranlaßt die Steuereinheit 18 das Auslesen der Resonanzfrequenzen mindestens eines Resonanzfrequenzmusters, die dann an den Steuereingängen der Signalgeneratoren 16 liegen.

Der Empfänger 11 umfaßt eine Empfangsantenne 19 mit Richtwirkung, die z. B. aus einer Vielzahl von äquidistant aufgereihten Hydrophonen bestehen kann, und eine Empfangseinheit 20 mit entsprechender, zur Richtungsbildung erforderlicher Signalverarbeitung der Empfangssignale der Einzelhydrophone der Empfangsantenne 19. An die Empfangseinheit 20 ist die Auswerteschaltung 13 angeschlossen, die zunächst eine Anzahl n Bandpässe 21 aufweist, deren Mittenfrequenz jeweils auf eine der Sendefrequenzen $f_1$-$f_n$ der Sendesignalgeneratoren 16 eingestellt ist. Die Einstellung der Mittenfrequenzen erfolgt wiederum über Steuereingänge, die mit dem Musterspeicher 12 verbunden sind. Anstelle der Bandpässe 21 können auch andere Frequenzanalysatoren, z. B. ein Fourier-Transformator, verwendet werden. Die Ausgänge der Bandpässe 21 sind über jeweils einen Schwellwertschalter 22 mit einer Mustervergleichsvorrichtung 23 verbunden, die andererseits an dem Musterspeicher 12 angeschlossen ist. Die Mustervergleichsvorrichtung 23 vergleicht die an ihren Eingängen anstehenden Resonanzfrequenzen des Empfangsspektrums mit dem jeweils aus dem Musterspeicher 12 ausgelesenen Resonanzfrequenzmuster und gibt bei Übereinstimmung ein entsprechendes Steuersignal für eine Anzeigevorrichtung 24 aus.

Mit der vorstehend beschriebenen Vorrichtung wird das Verfahren zur Detektion und Klassifikation von U-Booten wie folgt durchgeführt:

Befindet sich das die Vorrichtung tragende Schiff in einem bestimmten Seegebiet und will seine Gefährdung durch U-Boote rechtzeitig erkennen, so werden von den in dem Musterspeicher 12 gespeicherten Resonanzfrequenzmustern die Resonanzfrequenzmuster von denjenigen U-Boot-Typen aufgerufen, von denen man weiß oder vermutet, daß diese in dem Seegebiet operieren. Die einzelnen Resonanzfrequenzen werden ausgelesen und jeweils einem Steuereingang der Sendesignalgeneratoren 16 zugeführt. Weisen mehrere Resonanzfrequenzmuster verschiedener U-Boot-Typen teilweise übereinstimmende Resonanzfrequenzen auf, so wird die übereinstimmende Resonanzfrequenz jeweils nur einmal vom Musterspeicher 12 ausgegeben. Jeder Sendesignalgenerator 16 erzeugt nunmehr ein Sendesignal mit der durch eine der Resonanzfrequenzen vorgegebenen Sendefrequenz. Der von der Steuereinheit 18 gesteuerte Multiplexer 17 verbindet nun jeweils und aufeinanderfolgend einen der Sendesignalgeneratoren 16 für eine vorbestimmte Zeitdauer t mit der Sendeeinheit 14. Im der Sendeeinheit 14 werden die einen Einzelpuls darstellenden Sendesignalabschnitte verstärkt und über die Sendeantenne 15 als aus Einzelpulsen zusammengesetzte Sendeimpulsfolge ins Wasser abgestrahlt. Ein Beispiel einer solchen akustischen Sendepulsfolge ist in Fig. 2 schematisch dargestellt. Deutlich sind die Einzelpulse mit der Zeitdauer t und der unterschiedlichen Sendefrequenz zu sehen, wobei im Beispiel der nachfolgende Einzelpuls jeweils eine größere Einzelpulsfrequenz oder Sendefrequenz aufweist.

Die ausgesandten Einzelpulse der Sendepulsfolge treffen auf Unterwasserobjekte, darunter auch auf im Seegebiet operierende U-Boote. Da die Sendepulsfolge Frequenzen enthält, die exakt auf Resonanzfrequenzen der U-Boote abgestimmt sind, werden die beschallten U-Boote zur Resonanz angefacht, was eine Vergrößerung der reflektierten Signalamplitude bewirkt.

Die von Unterwasserobjekten, einschließlich U-Booten, reflektierten Einzelpulse werden über die Empfangsantenne 19 erfaßt und in der Empfangseinheit 20 einer Richtungsbildung unterzogen und so die Peilung zu den erfaßten Unterwasserobjekten gewonnen. Die Empfangssignale werden mittels der Bandpässe 21 einer Frequenzanalyse unterzogen. Die Mittenfrequenzen $f_1$-$f_n$ der Bandpässe 21 sind entsprechend den Einzelpulsfrequenzen $f_1$-$f_n$ eingestellt, so daß lediglich Frequenzen in unmittelbarer Nähe der Einzelpulsfrequenzen die Bandpässe 21 passieren und zu den Schwellwertschaltern 22 gelangen können. Durch entsprechende Einstellung der Schwelle der Schwellwertschalter 22 tritt am Ausgang der Schwellwertschalter 22 nur dann ein Signal auf, wenn die Signalamplitude am Eingang der Schwellwertschalter 22 signifikant groß ist und damit charakteristisch für eine Resonanzfrequenz. Der Mustervergleichsvorrichtung 23 werden somit aus dem Empfangsspektrum der Empfangssignale nur Resonanzfrequenzen zugeführt.

Der Mustervergleichsvorrichtung 23 werden nunmehr von dem Musterspeicher 12 nacheinander alle Resonanzfrequenzmuster zugeführt, die anfangs zur Einstellung der Sendesignalgeneratoren 16 aufgerufen worden sind. In der Mustervergleichsvorrichtung 23 werden nunmehr die Resonanzfrequenzen des Empfangsspektrums mit jedem der Resonanzfrequenzmuster ver glichen. Wenn die Resonanzfrequenzen des jeweils zu vergleichenden Resonanzfrequenzmusters sich vollständig im Empfangsspektrum wiederfinden, so generiert die Mustervergleichsvorrichtung 23 ein Signal, das die Anzeigevorrichtung 24 ansteuert und diese veranlaßt, ein Detektionssignal auszugeben. Zugleich kann der U-Boot-Typ, zu dem das Resonanzfrequenzmuster zugehörig ist, in der Anzeigevorrichtung 24 dargestellt werden, wodurch zugleich das detektierte U-Boot klassifiziert ist.

In Abwandlung des vorstehend beschriebenen Verfahrens kann jede Sendepulsfolge mit ihren Einzelpulsfrequenzen nur ein einziges, aber vollständiges Resonanzfrequenzmuster eines bekannten U-Boot-Typs, abdecken. In diesem Fall werden zur Detektion von im Seegebiet möglicherweise vorhandenen U-Booten nacheinander die Resonanzfrequenzmuster der verschiedenen U-Boot-Typen ausgelesen, wobei nacheinander immer ein komplettes Resonanzfrequenzmuster an den Ausgängen des Musterspeichers 12 erscheint. Entsprechend den Resonanzfrequenzen werden die Sendefrequenzen $f_1$-$f_n$ der einzelnen Sendegeneratoren 16 und die Mittenfrequenzen $f_1$-$f_n$ der Bandpässe 21 eingestellt. Die Mustervergleichsvorrichtung 23 wird mit dem aufgerufenen Resonanzfrequenzmuster geladen. Das aus den Empfangssignalen gewonnene Empfangsspektrum wird in der Mustervergleichsvorrichtung 23 mit dem Resonanzfrequenzmuster verglichen und bei Übereinstimmung ein entsprechendes Steuersignal an die Anzeigevorrichtung 24 gegeben. Nachfolgend wird ein weiteres Resonanzfrequenzmuster aufgerufen und mit den Resonanzfrequenzen die Sendegeneratoren 16 und die Bandpässe 21 eingestellt. Auch hier wird wiederum das Resonanzfrequenzmuster in die Mustervergleichsvorrichtung 23 geladen und mit dem Empfangsspektrum verglichen. Dieser Vorgang wird fortgesetzt, bis alle Resonanzfrequenzmuster möglicher im Seegebiet operierender U-Boot-Typen abgearbeitet worden sind.

## Ansprüche

1. Verfahren zum Erkennen von Unterwasserobjekten, bei welchem das Unterwasserobjekt durch Beschallung zur Eigenresonanz angeregt wird und in dem Empfangsspektrum der von dem Unterwasserobjekt ausgehenden Echos Resonanzfrequenzen detektiert und verglichen werden, dadurch gekennzeichnet, daß die Beschallung mit einer Sendepulsfolge durchgeführt wird, in welcher die Einzelpulsfrequenzen ($f_1$ bis $f_n$) auf jeweils eine der Resonanzfrequenzen mindestens eines bekannten Resonanzfrequenzmusters eines U-Boot-Typs abgestimmt sind, und daß die Gesamtheit der in dem Empfangsspektrum enthaltenen Resonanzfrequenzlinien mit dem Resonanzfrequenzmuster des U-Boot-Typs verglichen wird.

2. Verfahren nach Anspruch 1, dadurch gekennzeichnet, daß jede Sendepulsfolge mit ihren Einzelpulsfrequenzen ein komplettes Resonanzfrequenzmuster eines bekannten U-Boot-Typs abdeckt, daß mehrere auf verschiedene Resonanzfrequenzmuster abgestimmte Sendepulsfolgen hintereinander ausgesendet werde n und daß die den einzelnen Sendepulsfolgen zuzuordnenden Empfangsspektren jeweils mit dem entsprechenden Sendefrequenzmuster auf Übereinstimmung geprüft werden.

3. Verfahren nach Anspruch 1, dadurch gekennzeichnet, daß die Sendepulsfolge mit ihren Einzelpulsfrequenzen eine Mehrzahl von bekannten Resonanzfrequenzmustern verschiedener U-Boot-Typen abdeckt, wobei für übereinstimmende Resonanzfrequenzen aus verschiedenen Resonanzfrequenzmustern nur ein mit seiner Sendefrequenz darauf abgestimmter Einzelpuls ausgesendet wird, und daß das Empfangsspektrum nacheinander mit jedem der in der Mehrzahl enthaltenen Resonanzfrequenzmuster auf Übereinstimmung geprüft wird.

## Claims

1. Process for detecting underwater objects, with which the underwater object is excited to its self resonance through insonification and in which resonant frequencies in the reception spectrum of the echo emitted by the underwater object are detected and compared, characterised in that the insonification is performed by a transmission pulse sequence in which the individual pulse frequencies (f1 to fn) are each matched to one of the resonant frequencies of at least one of the resonance frequency patterns of a type of submarine, and that all of the resonant frequency lines contained in the reception spectrum are compared with the resonant frequency pattern of the submarine type.

2. Process according to claim 1, characterised in that each transmission pulse sequence with its individual frequencies covers a complete resonant frequency pattern of a known type of submarine, and that several transmission pulse sequences, each tuned to a different resonant frequency pattern, are transmitted consecutively and that the reception spectra corresponding to the individual transmission pulse sequences are each tested for matching with the corresponding transmission frequency pattern.

3. Process according to claim 1, characterised in that the transmission pulse sequence with its individual pulse frequencies covers a majority of the known resonant frequency patterns of various submarines, whereby for matching resonant frequencies contained in various resonant frequency patterns only a single pulse is transmitted, with its transmission frequency tuned to this frequency pattern, and whereby the reception spectrum is checked for matching consecutively with each of the resonant frequency patterns contained in the majority.

## Revendications

1. Procédé destiné à reconnaître des objets sous-marins auquel cas ledit objet sous-marin est par insonification porté à sa résonance propre et dans lequel des fréquences de résonance du spectre de réception de l'écho émis par l'objet sous-marin sont détectés et comparés, c'est à dire procédé caractérisé par le fait que l'insonification est effectuée par une suite d'impulsions d'émission dans laquelle les fréquences d'impulsion individuelles (f 1 à fn) sont chacune accordées sur l'une des fréquences d'émission d'au moins un modèle de fréquence de résonance d'un type de sous-marin et que toutes les lignes de fréquence de résonance contenues dans le spectre de réception sont comparées au modèle de fréquences de résonance du type de sous-marin.

2. Procédé conforme à la revendication 1, caractérisé par le fait que chaque suite d'impulsions d'émission couvre avec ses fréquences individuelles un modèle complet de fréquences de résonance d'un type de sous-marin connu et que plusieurs suites d'impulsions d'émission, dont chacune est accordée sur différents modèles de fréquence résonnante, sont émises l'une après l'autre et que les spectres de réception correspondants aux différentes suites d'impulsions d'émission sont chacune examinées de manière à déterminer si elles concordent avec le modèle de fréquence d'émission correspondant.

3. Procédé conforme à la revendication 1, caractérisé par le fait que la suite d'impulsions d'émission couvre avec ses fréquences d'impulsions individuelles la majorité des modèles de fréquences de résonance connus de différents sous-marins auquel cas on n'émet pour des fréquences de résonances concordantes, contenues dans différents modèles de fréquence de résonance, qu'une seule impulsion dont la fréquence d'émission est accordée à ce modèle de fréquence est auquel cas, le spectre de réception est, en vue de déterminer une concordance, comparé, l'un après l'autre, à chacun des modèles de fréquence de résonance compris dans la majorité ci-dessus.

Fig. 1

Fig. 2